# EUROPÄISCHE PATENTANMELDUNG

(11) **EP 4 620 646 A1**
(43) Veröffentlichungstag der Anmeldung: **24.09.2025**
(21) Anmeldenummer: 25162338.5
(22) Anmeldetag: 07.03.2025
(51) Int. Cl.: B29B 7/40, B29B 7/12, B29B 7/82, B29B 7/72, B29B 7/38, B01F 27/27

(54) **DYNAMISCHE MISCHVORRICHTUNG FÜR EIN FLUID, EXTRUDER MIT EINER DERARTIGEN MISCHVORRICHTUNG UND VERFAHREN ZUM BETREIBEN EINER DYNAMISCHEN MISCHVORRICHTUNG FÜR EIN FLUID**

(30) Priorität: 19.03.2024 DE 102024000885
(71) Anmelder: BB Engineering GmbH, 42897 Remscheid (DE)
(72) Erfinder: Imping, Wolfgang, 42897 Remscheid (DE)
(74) Vertreter: Neumann, Ditmar

(57) **Zusammenfassung**

Die vorliegende Offenbarung betrifft eine dynamische Mischvorrichtung (1) für ein Fluid (2), insbesondere für ein viskoses Medium, mit einer mittels eines Gehäuses (3) ausgebildeten Mischkammer (4), mit einem Stator (5) und mit einem Rotor (6), wobei der Stator (5) und der Rotor (6) zumindest teilweise innerhalb der Mischkammer (4) angeordnet sind, wobei der Stator (5) mit dem Gehäuse (3) verbunden und/oder mittels des Gehäuses (3) ausgebildet ist, wobei der Rotor (6) um eine Drehachse (D) rotierbar ist, wobei mittels des Rotors (6) zumindest ein Freiraum ausgebildet ist, in welchen der Stator (5) zumindest teilweise in Richtung der Drehachse (D) hineinragt, wobei der Stator (5) und/oder der Rotor (6) zumindest einen Temperierkanal (7) aufweist, durch welchen zur Temperierung des Stators (5) und/oder des Rotors (6) ein Temperierfluid (8) hindurchströmbar ist. Die vorliegende Offenbarung betrifft weiterhin einen Extruder (16) mit einer solchen Mischvorrichtung (1), sowie ein Verfahren zum Betreiben einer dynamischen Mischvorrichtung (1) für ein Fluid (2) und/oder eines Extruders (16) mit der dynamischen Mischvorrichtung (1).

## Beschreibung

Die vorliegende Erfindung betrifft eine dynamische Mischvorrichtung für ein Fluid, einen Extruder mit einer derartigen Mischvorrichtung und ein Verfahren zum Betreiben einer dynamischen Mischvorrichtung für ein Fluid. Das Fluid ist insbesondere als viskoses Medium ausgeführt. Als Fluid könnte z.B. ein schmelzeflüssiges Polymer und/oder dessen Mischung mit Füllstoffen und/oder niedrigviskosen Lösungen zum Einsatz kommen.

Die DE 10 2021 002 064 A1 zeigt eine dynamische Mischvorrichtung mit einem Stator und einem koaxial zum Stator angeordneten Rotor, wobei der Rotor relativ zum Stator um eine Drehachse drehbar gelagert ist, wobei der Stator zumindest abschnittweise innerhalb eines durch den Rotor aufgespannten Volumens angeordnet ist. Der Stator und der Rotor sind zumindest teilweise innerhalb einer mittels eines Gehäuses ausgebildeten Mischkammer angeordnet. Zumindest eines der zu mischenden Fluide ist entlang der Drehachse und durch den Stator hindurch der Mischkammer zuführbar oder ein entsprechend gemischtes Fluid ist auf umgekehrtem Weg aus der Mischkammer abführbar. Das Gehäuse ist von au-βen mit Hilfe einer Temperierung z.B. einer Heiz-Kühlmanschette temperierbar.

Im Betrieb ergibt sich hier das Problem, dass das Fluid durch den dynamischen Mischvorgang stark erwärmt wird. Die äußere Temperierung führt dann zu einem Temperaturgefälle innerhalb des Fluids und somit auch ungleichmäßigen Eigenschaften des Fluids. Insbesondere in der Mitte der Mischkammer bzw. mit größer werdendem Abstand zur Temperierung kann das Fluid eine zu hohe Temperatur aufweisen, bei welcher z.B. ein hohes Risiko einer unerwünschten Degradierung eines als schmelzeflüssigen Polymers ausgeführten Fluids besteht. Grundsätzlich ist auch die Temperierleistung der Temperierung insgesamt limitiert, nämlich aufgrund der nur kleinen äußeren Flächen zur Wärmeübertragung.

Es sind weiterhin eine Vielzahl statischer Mischer für Fluide, insbesondere für viskose Medien wie schmelzeflüssige Polymere, bekannt. Die EP 1 067 352 A1 zeigt einen solchen statischen Mischer zum Wärmeaustausch in einem Strömungskanal für strömende Fluide mit mindestens einem Mischeinsatz mit einem integrierten Rohrbündel. Die Mischeinsätze weisen vier sich kreuzend hindurchreichende Stegplatten und gekürzte sich kreuzende Stegplatten auf.

Die EP2851118B1 beschreibt eine Vorrichtung zum statischen Mischen und zum Wärmeaustausch. Die Vorrichtung weist ein Mantelelement und einen Mischereinsatz auf. Der Mischereinsatz ist im Betriebszustand im Inneren des Mantelelements angeordnet. Der Mischereinsatz hat eine Längsachse und umfasst eine erste Gruppe von Stegelementen sowie eine zweite Gruppe von Stegelementen. Die erste Gruppe von Stegelementen erstreckt sich entlang einer gemeinsamen ersten Gruppenebene und die zweite Gruppe von Stegelementen erstreckt sich entlang einer zweiten gemeinsamen Gruppenebene. Mindestens ein Teil der Stegelemente weist Kanäle auf. Die Kanäle erstrecken sich von einem ersten Ende des Stegelements zu einem zweiten Ende des Stegelements. Das Mantelelement enthält je einen korrespondierenden Kanal, der mit dem ersten Ende und zweiten Ende des Stegelements in fluidleitender Verbindung steht, wobei der Übergang von zumindest einem der ersten und zweiten Enden des Stegelements zu dem jeweils korrespondierenden Kanal im Mantelelement spaltfrei erfolgt.

In der EP 2 052 199 A1 ist ein Apparat gezeigt, der eine Wärmeübertragung zwischen einer Flüssigkeit und einem wärmetransportierenden Medium mit einem statischen Mischen der Flüssigkeit kombiniert. Der Apparat umfasst in einem Mantel angeordnete Einbauten. Der Mantel erstreckt sich longitudinal zwischen einem Kopfende und einem Basisende. Die Einbauten bilden eine wärmeübertragende und mischende Struktur. Das wärmetransportierende Medium ist als innerer Strom in Rohren der Einbauten vom Basisende zum Kopfende förderbar.

Die EP 2 113 732 A1 zeigt einen Mischer-Wärmetauscher zum Heizen und Kühlen von fließfähigen Stoffen mit einem Strömungskanal mit in einer Längsachse angeordneten Wärmetauscherrohren und statischen Mischelementen. Die Wärmetauscherrohre durchsetzen die Mischelemente im wesentlichen formschlüssig über Öffnungen. Die Wärmetauscherrohre und die Mischelemente sind zur Erzeugung einer schabenden Bewegung an der Oberfläche der Wärmetauscherrohre relativ zueinander in der Längsachse verschiebbar. Damit lassen sich Ablagerungen an den Wärmetauscherrohren auf einfache Weise ohne Demontage des Mischer-Wärmetauschers entfernen. Durch das Schaben kann, wenn überhaupt, nur eine kleine zusätzliche Mischwirkung erzielt werden. Das Schaben wird üblicherweise aber nicht während der normalen Produktion durchgeführt, damit die Ablagerungen nicht in das herzustellende Produkt gelangen können. Das Schaben wird demgegenüber vorzugsweise in Reinigungszyklen durchgeführt, in welchen kein Produkt hergestellt wird.

Die hier gezeigten statischen Mischer weisen nur eine schlechte Mischwirkung auf. Um trotzdem die gewünschte notwendige Mischwirkung erreichen zu können, werden entsprechend große statische Mischer mit einem dann auch großen Bauraumbedarf genutzt. Das statische Mischen führt aber auch zu einem großen Druckverlust, so dass in einigen Fällen in den Anlagen, in welchen die statischen Mischer eingesetzt werden, eine zusätzliche Pumpe notwendig ist. Eine solche zusätzliche Pumpe führt dann aber ihrerseits wiederum zu einer unerwünschten Temperaturerhöhung des Fluids und auch zu zusätzlichen Kosten.

Die DE 2 146 150 A1 offenbart einen Mischer mit einer Einrichtung zum Kühlen von staubförmigen, körnigem, flüssigem oder sonstigem fließfähigen Mischgut, insbesondere von Kunststoffagglomeraten. Der Mischer weist einen gegebenenfalls doppelwandigen, kühlmitteldurchströmten, topfförmigen Mischbehälter mit einem im Zentrum über dessen Boden umlaufenden Mischwerkzeug auf. In den Innenraum des Mischbehälters ragen doppelwandige, kühlmitteldurchströmte spatenförmige, vorzugsweise in Bezug auf die Mittelachse des Mischbehälters konkav gewölbte, als Leitbleche ausgebildete Kühlelemente hinein, welche im Abstand von der Innenwand des Mischbehälters und in Umfangsrichtung im Abstand voneinander hintereinanderliegend angeordnet und gegen das anströmende Mischgut derart ein- und anstellbar sind, dass die Ablaufkante radial weiter innen liegt als die Anströmkante. Der hier gezeigte Mischer ist aber nur bedingt geeignet Fluide wie schmelzeflüssige Polymere zu Mischen und zu Kühlen. Primär sollen hier Schüttgüter, wie z.B. Kunststoffgranulat, gemischt und temperiert werden. Der Aufbau des Mischers ist nämlich sehr kompliziert ausgebildet, was bei der Durchströmung mittels eines Fluids zur Ausbildung einer Vielzahl von Totzonen führt, in welchen z.B. ein als schmelzeflüssiges Polymer ausgebildetes Fluid degradiert. Der komplizierte Aufbau allein führt bereits zu einem hohen Aufwand bei der Auslegung und auch bei der Produktion des Mischers.

Der vorliegenden Erfindung liegt somit die Aufgabe zugrunde, eine dynamische Mischvorrichtung für ein Fluid, einen Extruder mit einer derartigen Mischvorrichtung und ein Verfahren zum Betreiben einer dynamischen Mischvorrichtung für ein Fluid bereitzustellen, welche die Probleme des Stands der Technik reduzieren oder beseitigen. Insbesondere soll ein Mischen und Temperieren des Fluides simultan und effektiv ermöglicht sein.

Diese Aufgabe wird zunächst durch eine dynamische Mischvorrichtung gemäß Anspruch 1 gelöst.

Weitere vorteilhafte Ausführungsformen sind Gegenstand der Unteransprüche.

Genauer wird die Aufgabe durch eine dynamische Mischvorrichtung für ein Fluid, insbesondere für ein viskoses Medium, mit einer mittels eines Gehäuses ausgebildeten Mischkammer, mit einem Stator und mit einem Rotor gelöst, wobei der Stator und der Rotor zumindest teilweise innerhalb der Mischkammer angeordnet sind, wobei der Stator mit dem Gehäuse verbunden und/oder mittels des Gehäuses ausgebildet ist, wobei der Rotor um eine Drehachse rotierbar ist, wobei mittels des Rotors zumindest ein Freiraum ausgebildet ist, in welchen der Stator zumindest teilweise in Richtung der Drehachse hineinragt, wobei der Stator und/oder der Rotor zumindest einen Temperierkanal aufweist, durch welchen zur Temperierung des Stators und/oder des Rotors ein Temperierfluid, insbesondere durch Anlegen einer Druckdifferenz an den Temperierkanal, hindurchströmbar ist.

Der Stator weist zumindest teilweise und mit dem in den Freiraum des Rotors hineinragenden Abschnitt einen kleineren Abstand zur Drehachse auf als der diesen Freiraum bildende Bereich des Rotors. Eine senkrecht zur Drehachse angeordnete Ebene durchdringt dann den in den Freiraum des Rotors hineinragenden Abschnitt des Stators und den Rotor. Diese Ebene durchdringt dann vorteilhafterweise auch den Temperierkanal. Somit ist das Fluid simultan und effektiv durchmischbar und temperierbar. Durch den Rotor ist nämlich ein effektives dynamischen Mischen realisierbar und durch ein Hindurchströmen des Temperierfluids durch den Temperierkanal des Stators und/oder des Rotors ist das Fluid in den Bereichen temperierbar, insbesondere kühlbar, in welchen das Fluid durch das dynamische Mischen erwärmt wird. Weiterhin ist eine große Wärmeübergangsfläche zwischen dem Stator und/oder dem Rotor und dem Fluid erreichbar. Es sei an dieser Stelle klargestellt, dass sich das zu mischende Fluid, aus welchem ein Produkt hergestellt werden soll, und das Temperierfluid in der Mischvorrichtung nicht miteinander mischen, also die Mischkammer und der Temperierkanal fluidisch voneinander getrennt ausgebildet sind.

Vorteilhafterweise ist durch ein Rotieren des Rotors ein Fluidstrom des Fluids vom Rotor in Richtung des Stators erzeugbar und/oder ein derartiger Fluidstrom ist zur Durchmischung des Fluids veränderbar. Dazu weist der Rotor und/oder der Stator entsprechende Oberflächen bzw. Randkonturen auf. Z.B. könnten Stege an der Oberfläche des Rotors angeordnet und/oder ausgebildet sein. Insbesondere ist eine Scherung des Fluids zwischen dem Rotor und dem Stator erzeugbar, insbesondere durch ein Rotieren des Rotors, wobei durch die Scherung das Mischen gefördert wird. Durch die Rotation des Rotors ist ein vorzugsweise steter oder wechselnder dynamischer Austausch des Fluids zwischen dem Rotor, dem Stator und/oder einer Innenwand des Gehäuses realisierbar. Z.B. ist eine Strömung des Fluids vom Rotor zum Stator und wieder zurück erzeugbar. Somit ist einerseits eine gute Durchmischung des Fluids erreicht und anderseits ist das Fluid gut temperierbar, da es immer wieder zu den Temperierkanälen hinführbar ist.

In einer bevorzugten Ausführungsform der Mischvorrichtung sind der Stator und der Rotor zumindest teilweise koaxial zueinander angeordnet. Somit sind kleine Zwischenräume zwischen dem Stator und dem Rotor ausbildbar, wodurch eine bessere Durchmischung des Fluids, insbesondere aufgrund hoher Scherkräfte, ermöglicht ist. Weiterhin ist eine gleichmäßige Durchmischung des Fluids in Umfangsrichtung des Rotors erreichbar. Vorzugsweise ist die Mischkammer zylindrisch ausgebildet. Weiter bevorzugt ist die Mischkammer dann auch koaxial zum Stator und/oder Rotor angeordnet.

In einer besonders bevorzugten Ausführungsform der Mischvorrichtung weist der Rotor zumindest einen Rotor-Durchbruch auf. Der Rotor-Durchbruch ist insbesondere in dem den Freiraum bildenden Bereich des Rotors ausgebildet. Mittels der durch den Rotor-Durchbruch gebildeten Innenwände des Rotors ist das Fluid bei Rotation des Rotors beschleunigbar und somit der Fluidstrom, insbesondere in Richtung des Stators, erzeugbar. Vorzugsweise ist eine Vielzahl von Rotor-Durchbrüchen über den Umfang des Rotors und/oder in Längsrichtung des Rotors verteilt, so dass die beschriebene Beschleunigung des Fluids zu einer besonders guten und gleichmäßigen Durchmischung des Fluids führt. Durch den Rotor-Durchbruch ist weiterhin die Oberfläche des Rotors vergrößert, so dass ein größerer Wärmeübergang zwischen dem Fluid und dem Rotor ermöglicht ist.

Weiter bevorzugt weist der Stator zumindest eine Stator-Ausnehmung und/oder einen Stator-Durchbruch auf. Somit kann die Durchmischung des Fluids weiter verbessert werden, nämlich durch Umlenkung des Fluids an der Stator-Ausnehmung und/oder dem Stator-Durchbruch. Vorzugsweise ist auch eine Vielzahl von Stator-Ausnehmungen und/oder Stator-Durchbrüchen über den Umfang des Stators und/oder in Längsrichtung des Stators verteilt, so dass die Durchmischung des Fluids weiter verbessert ist. Durch die Stator-Ausnehmung und/oder den Stator-Durchbruch ist weiterhin die Oberfläche des Stators vergrößert, so dass ein größerer Wärmeübergang zwischen dem Fluid und dem Stator ermöglicht ist.

Es kann vorteilhaft sein, wenn sich der Rotor-Durchbruch und die Stator-Ausnehmung und/oder der Stator-Durchbruch bei einer Rotation des Rotors zumindest teilweise zumindest zeitweise überlappen. Somit kann die Durchmischung des Fluids weiter verbessert werden.

Vorteilhafterweise weist der Rotor zumindest eine hohlzylindrisch ausgebildete Hülse auf, wobei die Hülse an einer ihrer Stirnseiten mit einer Rotor-Welle verbunden, insbesondere verschraubt oder verschweißt, ist. Mittels der Hülse ist der Rotor besonders einfach und mit wenig Aufwand herstellbar. Z.B. könnte ein zunächst eben ausgeführtes Blech zur Ausbildung der Hülse gebogen und dann mit der Rotor-Welle verschweißt werden. Der genannte Rotor-Durchbruch wäre dann vorteilhafterweise in das noch ebene Blech mittels eines Stanzverfahrens mit geringem Aufwand einbringbar. Demgegenüber könnte der Rotor auch mittels einer Gruppe / einer Vielzahl von vorzugsweise geraden, stabförmigen Mischelementen ausgebildet sein, welche miteinander verbunden sind.

Vorzugsweise weist der Rotor zwei oder mehr, bevorzugterweise drei bis sechs, besonders bevorzugt vier, koaxial zueinander angeordnete hohlzylindrisch ausgebildete Hülsen auf. Somit kann die Durchmischung des Fluids weiter verbessert werden. Auch der Wärmeübergang zwischen dem Fluid und dem Rotor kann durch eine derartige Vergrößerung der Oberfläche des Rotors weiter verbessert werden. Diese Hülsen sind vorzugsweise alle mit zur selben Seite ausgerichteten Stirnseiten mit der Rotor-Welle verbunden.

Gemäß einer weiteren Ausführungsform der Mischvorrichtung weist der Stator zumindest einen Rohrbogen auf. Der Rohrbogen ragt zumindest teilweise in den Freiraum des Rotors zumindest teilweise in Richtung der Drehachse hinein. Dem Rohrbogen ist das Temperierfluid über einen vorzugsweise außerhalb des Freiraumes angeordneten Zufuhr-Anschluss zuführbar. Das Temperierfluid ist aus dem Rohrbogen über einen vorzugsweise außerhalb des Freiraumes angeordneten Abfuhr-Anschluss abführbar. Ein solcher Rohrbogen ist einfach herstellbar, z.B. mittels eines entsprechenden Biegeverfahrens. Der Stator-Durchbruch ist dann insbesondere zwischen zwei einander gegenüberliegenden Bereichen des Rohrbogens ausgebildet.

Gemäß einer weiteren vorteilhaften Ausführungsform der Mischvorrichtung weist der Stator mehrere Rohrbögen auf, welche rotationssymmetrisch zur Drehachse angeordnet sind. Insbesondere sind die Rohrbögen zu einem Ring angeordnet. Durch diese rotationssymmetrische Anordnung zur Drehachse ist in Kombination mit der Rotation des Rotors um die Drehachse eine besonders gleichmäßige Durchmischung des Fluids erreichbar.

Gemäß einer weiteren besonders vorteilhaften Ausführungsform der Mischvorrichtung weist der Stator zumindest eine Gruppe von rotationssymmetrisch zur Drehachse angeordneten Rohrbögen auf. Die Rohrbögen der Gruppe ragen jeweils zumindest teilweise in einen zwischen zwei benachbarten Hülsen ausgebildeten Freiraum des Rotors hinein. Somit ist die Durchmischung des Fluids, insbesondere durch vielfache Scherung des Fluids, weiter verbessert. Zusätzlich ist die Oberfläche des Stators weiter vergrößert, so dass ein größerer Wärmeübergang zwischen dem Fluid und dem Stator ermöglicht ist.

Die der Erfindung zugrundeliegende Aufgabe wird auch durch einen Extruder mit einer im Vorhinein beschriebenen Mischvorrichtung gemäß Anspruch 12 gelöst.

Genauer wird die Aufgabe dann dadurch gelöst, dass der Extruder eine in einem Schneckengehäuse des Extruders gelagerte Extruderschnecke aufweist, die mit einem Schneckenantrieb des Extruders gekoppelt ist, wobei das Gehäuse der Mischvorrichtung mit dem Schneckengehäuse verbunden und/oder zumindest teilweise mittels des Schneckengehäuses ausgebildet ist.

Durch die dynamische Mischvorrichtung ist sichergestellt, dass das Fluid, insbesondere das schmelzeflüssige Polymer, den Extruder in dessen Betrieb mit der gewünschten, insbesondere nicht zu hohen, Temperatur verlässt und weiterhin eine hohe Gleichmäßigkeit der Eigenschaften des Fluids durch die gute Durchmischung erreicht ist. Die hohe Gleichmäßigkeit bezieht sich z.B. auf die Verteilung von in dem Fluid angeordneten Füllstoffen wie Farbpartikeln und/oder der chemischen Zusammensetzung des Fluids. Die hohe Gleichmäßigkeit bezieht aber auch auf die Verteilung der Temperatur des Fluids über dessen Strömungsquerschnitte. Die dynamische Mischvorrichtung ist an bereits vorhanden Extrudern auf einfache Art und Weise nachrüstbar. Insbesondere kann die Mischvorrichtung anstelle eines sogenannten Messkopfes des Extruders mit dem Rest des Extruders verbunden werden. Ein solcher Messkopf weist üblicherweise einen Auslass des Extruders auf und umschließt zumindest teilweise einen Mischbereich der Extruderschnecke, über welchen das Fluid, insbesondere das schmelzeflüssige Polymer, den Extruder in dessen Betrieb verlässt. Der Messkopf bildet somit ein Ende des Extruders. Die dynamische Mischvorrichtung könnte analog auch an anderen Mischern, wie 3DD-Mischern mit separatem Antrieb, auf einfache Art und Weise nachrüstbar sein. Die dynamische Mischvorrichtung kann aber auch bei der Auslegung des Extruders und/oder anderen Mischern, wie den 3DD-Mischern mit separatem Antrieb, schon vorgesehen sein.

Vorteilhafterweise ist der Rotor, insbesondere die Rotor-Welle, mit der Extruderschnecke an einem dem Schneckenantrieb abgewandten Ende, insbesondere mittels einer Schraubverbindung, verbunden. Somit ist eine Montage des Extruders einfach möglich.

In einer bevorzugten alternativen Ausführungsform des Extruders ist die Extruderschnecke einstückig mit dem Rotor ausgebildet. Somit können vorteilhafterweise Fugen zwischen der Extruderschnecke und dem Rotor vermieden werden.

Weiter bevorzugt weist die Extruderschnecke eine Innentemperierung auf, über welche der Rotor mit Temperierfluid versorgbar ist. Zumindest ein in der Extruderschnecke ausgebildeter Temperierkanal ist dann mit einem in dem Rotor ausgebildeten Temperierkanal fluidisch verbunden. An einem der Mischvorrichtung gegenüberliegenden Ende der Extruderschnecke ist die Innentemperierung, insbesondere der in der Extruderschnecke ausgebildete Temperierkanal, über eine Drehdurchführung z.B. mittels einer Pumpe mit dem dann unter Druck stehenden Temperierfluid beaufschlagbar.

Die der Erfindung zugrundeliegende Aufgabe wird auch durch ein Verfahren zum Betreiben einer dynamischen Mischvorrichtung für ein Fluid gemäß Anspruch 16 gelöst.

Genauer wird die Aufgabe dann dadurch gelöst, dass ein Rotor der Mischvorrichtung innerhalb einer mittels eines Gehäuses der Mischvorrichtung ausgebildeten Mischkammer um eine Drehachse und um einen auch zumindest teilweise innerhalb der Mischkammer angeordneten, mit dem Gehäuse verbundenen und/oder mittels des Gehäuses ausgebildeten und zumindest teilweise in einen Freiraum des Rotors hineinragenden Stator der Mischvorrichtung rotiert wird, wobei der Stator und/oder der Rotor mittels eines durch einen Temperierkanal des Stators und/oder des Rotors hindurchströmenden Temperierfluids temperiert wird. Somit wird das Fluid simultan und effektiv durchmischt und temperiert. Das Fluid strömt durch die Mischkammer durch eine an die Mischkammer angelegte Druckdifferenz und/oder durch eine Beschleunigung des Fluids mittels des Rotors.

Die dynamische Mischvorrichtung für ein Fluid kommt insbesondere in Kombination mit einem als Metering-Extruder ausgebildeten Extruder zum Einsatz, welcher vorzugsweise zur Verarbeitung von Kunststoffen wie PET, PA, PP, PE und/oder deren Mischungen mit Füllstoffen und/oder niedrigviskosen Lösungen ausgelegt ist. Solche Metering-Extruder weisen insbesondere Innendurchmesser des Schneckengehäuses, welches auch als Extruder-Zylinder bezeichnet wird, von 200mm bis 400mm, vorzugsweise von 250mm bis 300mm, insbesondere von 250mm, 275mm, 300mm, 330mm oder 350 mm, auf. Die dynamische Mischvorrichtung kann auch in Kombination mit anderen Mischern, wie z.B. dem sogenannten 3DD-Mischer mit separatem Antrieb, zum Einsatz kommen.

Im Nachfolgenden werden bevorzugte Ausführungsformen unter Bezugnahme auf die anliegenden Figuren näher dargestellt.
Fig. 1 zeigt schematisch eine erste Ausführungsform der dynamischen Mischvorrichtung für ein Fluid in einer Seitenansicht im Schnitt.
Fig. 2 zeigt schematisch die erste Ausführungsform der Mischvorrichtung in einer Schnittansicht entlang der Linie A-A aus Fig.1.
Fig. 3 zeigt schematisch einen Stator der ersten Ausführungsform der Mischvorrichtung in einer dreidimensionalen Ansicht.
Fig. 4 zeigt schematisch einen Rotor der ersten Ausführungsform der Mischvorrichtung in einer dreidimensionalen Ansicht.
Fig. 5 zeigt schematisch einen Extruder mit einer gemäß einer zweiten Ausführungsform ausgebildeten dynamischen Mischvorrichtung für ein Fluid in einer Seitenansicht im Schnitt.

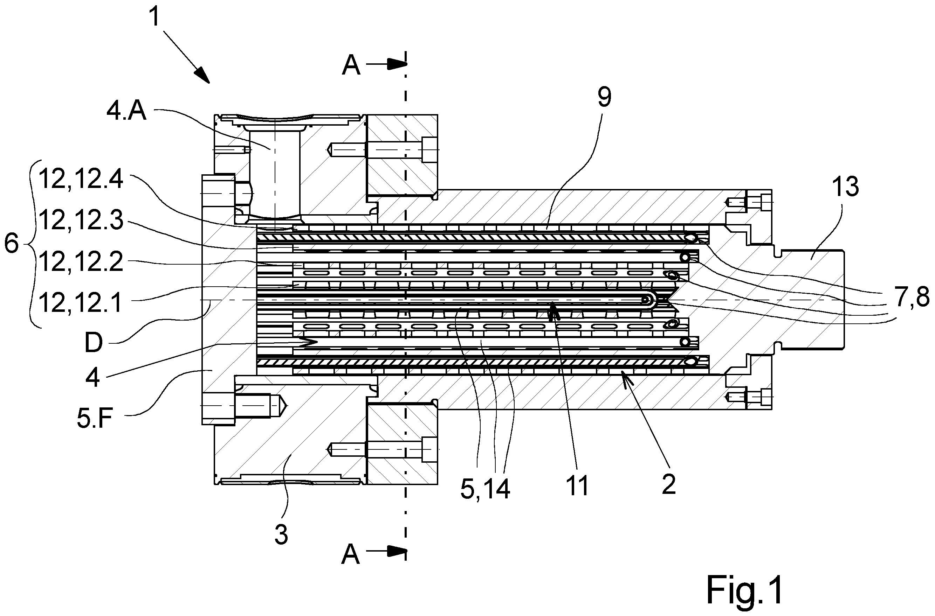

Eine dynamische Mischvorrichtung 1 für ein Fluid 2, insbesondere für ein viskoses Medium, gemäß Fig.1, Fig.2 und Fig.5 hat u.a. eine mittels eines Gehäuses 3 ausgebildete Mischkammer 4, einen Stator 5 und einen Rotor 6. Der Stator 5 und der Rotor 6 sind zumindest teilweise innerhalb der Mischkammer 4 angeordnet. Der Stator 5 ist mit dem Gehäuse 3 verbunden und/oder mittels des Gehäuses 3 ausgebildet. Der Rotor 6 ist um eine Drehachse D rotierbar. Mittels des Rotors 6 ist zumindest ein Freiraum ausgebildet, in welchen der Stator 5 zumindest teilweise in Richtung der Drehachse D hineinragt. Der Stator 5 und/oder der Rotor 6 weist zumindest einen Temperierkanal 7 auf, durch welchen zur Temperierung des Stators 5 und/oder des Rotors 6 ein Temperierfluid 8 hindurchströmbar ist.

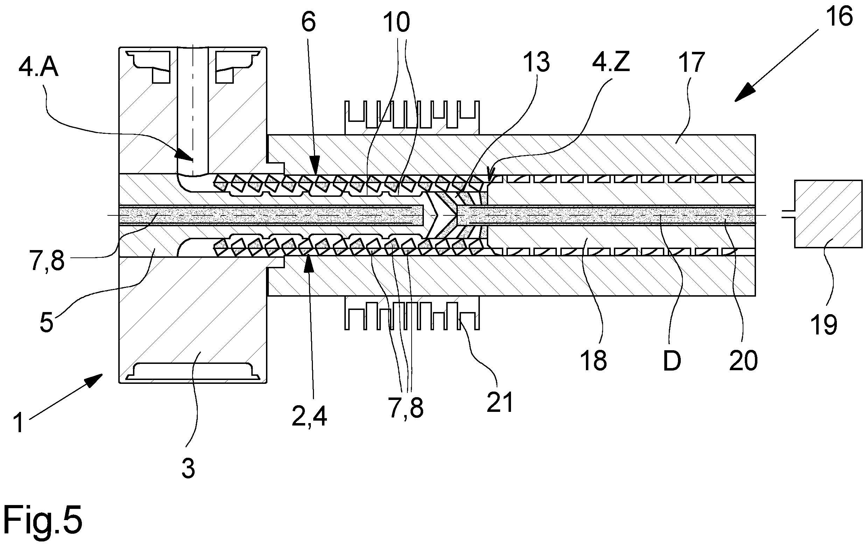

Gemäß der ersten Ausführungsform der Mischvorrichtung 1 weist lediglich der Stator 5 hier mehrere Temperierkanäle 7 auf. Gemäß der zweiten Ausführungsform der Mischvorrichtung 1 aus Fig.5 weisen der Stator 5 und der Rotor 6 Temperierkanäle 7 auf. Denkbar wäre demgegenüber auch noch, dass lediglich der Rotor zumindest einen Temperierkanal aufweist.

Das Gehäuse 3 ist gemäß Fig.1 mehrteilig ausgeführt, wobei die einzelnen Gehäuseteile mittels jeweils einer Schraubverbindung miteinander verbunden sind. Der Stator 5 weist einen Flansch 5.F auf, mittels welchem der Stator 5 mit dem Gehäuse 3, insbesondere mittels einer Schraubverbindung, verbunden ist. Vom Flansch 5.F aus führen die Temperierkanäle 7 vorzugsweise im Wesentlichen parallel zur Drehachse D in Richtung des Rotors 6.

Durch ein Rotieren des Rotors 6 ist ein Fluidstrom des Fluids 2 vom Rotor 6 in Richtung des Stators 5 erzeugbar und/oder ein derartiger Fluidstrom zur Durchmischung des Fluids 2 ist veränderbar. Durch diesen Fluidstrom ist das Fluid 2 vorzugsweise wiederholt in Richtung der Temperierkanäle 7 führbar. Das Fluid 2 ist der Mischkammer 4 über einen Zulauf 4.Z zuführbar und über einen Ablauf 4.A abführbar. Denkbar wäre auch jeweils zwei oder mehr Zuläufe und/oder Abläufe vorzusehen. Das Fluid 2 durchströmt die Mischkammer 4 im Betrieb der Mischvorrichtung 1 vom Zulauf 4.Z zum Ablauf 4.A. Das Fluid 2 kann dem Zulauf 4.Z unter erhöhtem Druck zugeführt werden. Anderseits kann auch durch das Rotieren des Rotors 6 ein Fluidstrom des Fluids 2 vom Zulauf 4.Z zum Ablauf 4.A erzeugt, zumindest aber unterstützt werden. Der Rotors 6 weist dazu dann eine entsprechende Außenkontur auf.

Der Stator 5 und der Rotor 6 sind zumindest teilweise koaxial zueinander angeordnet. Der Rotor 6 umgibt zumindest Teile des Stators 5 im Bereich des Freiraums vorzugsweise ringförmig. Außen- und/oder Innenumfänge des Stators 5 und/oder des Rotors 6 sind jeweils im Wesentlichen entlang einer zylindrischen Mantelfläche ausgebildet. Denkbar wäre demgegenüber auch, anders ausgeformte Mantelflächen vorzusehen.

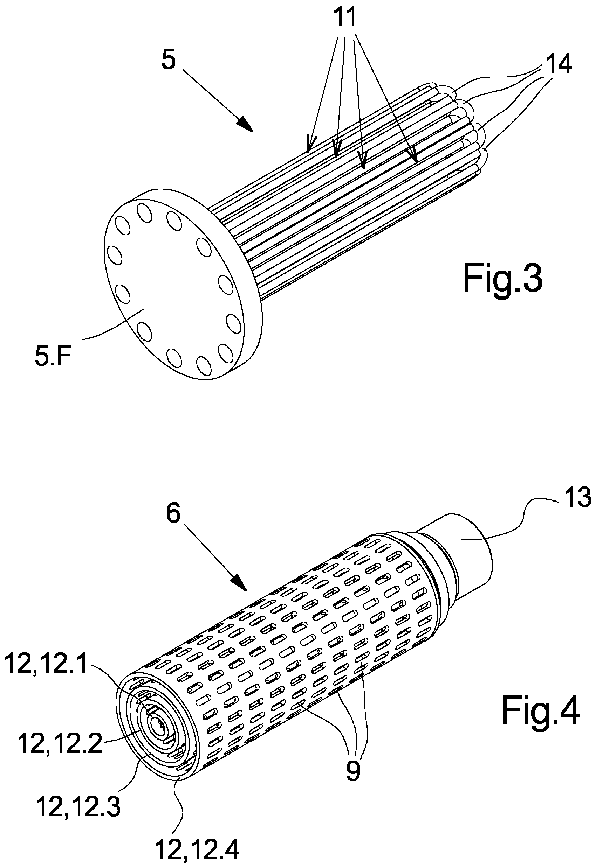

Der Rotor 6 weist zumindest einen Rotor-Durchbruch 9 auf. Mit den jeweils im Wesentlichen entlang einer zylindrischen Mantelfläche ausgebildeten Außen- und/oder Innenumfängen des Rotors 6 ist u.a. gemeint, dass diese zylindrischen Mantelflächen von solchen Rotor-Durchbrüchen 9 unterbrochen sein können. Gemäß Fig.1 und Fig.4 ist eine Vielzahl von Rotor-Durchbrüchen 9 vorgesehen, welche in Umfangsrichtung und in Richtung der Drehachse D gleichmäßig verteilt sind. Die Rotor-Durchbrüche 9 sind jeweils als Langloch ausgebildet, deren Längsachsen parallel zur Drehachse D angeordnet sind. Die Längsachsen der Langlöcher könnten auch einen Winkel zur Drehachse aufweisen.

Der Stator 5 weist zumindest eine Stator-Ausnehmung 10 und/oder einen Stator-Durchbruch 11 auf. Mit den jeweils im Wesentlichen entlang einer zylindrischen Mantelfläche ausgebildeten Außen- und/oder Innenumfängen des Stators 5 ist u.a. gemeint, dass diese zylindrischen Mantelflächen von solchen Stator-Ausnehmungen 10 und/oder Stator-Durchbrüchen 11 unterbrochen sein können. Gemäß Fig.5 ist eine Vielzahl von vorzugsweise sichelförmigen Stator-Ausnehmungen 10 vorgesehen, welche in Umfangsrichtung und in Richtung der Drehachse D vorzugsweise gleichmäßig verteilt sind. Gemäß Fig.1 und Fig.3 ist eine Vielzahl von von einem Endbereich des Stators 5 zum in Richtung der Drehachse D gegenüberliegenden Endbereich des Stators 5 ausgebildeten Stator-Durchbrüchen 11 vorgesehen, welche in Umfangsrichtung vorzugsweise gleichmäßig verteilt sind.

Der Rotor-Durchbruch 9 und die Stator-Ausnehmung 10 und/oder der Stator-Durchbruch 11 überlappen sich bei einer Rotation des Rotors 6 zumindest teilweise zumindest zeitweise. Somit ist das Durchmischen des Fluids 2 weiter verbessert. Durch Rotation des Rotors 6 ist der Fluidstrom des Fluids 2 in feine Schichten aufteilbar, die in verschiedenen Richtungen, insbesondere tangentialer und axialer Richtung, ständig umgelagert und dann wieder zusammengeführt werden. Die das Fluid 2 dehnenden, faltenden und bewegenden Vorgänge innerhalb der Mischkammer 4 vereinen verschiedene Prinzipien des Mischens, nämlich ein dispersives Mischen zur Zerkleinerung von Agglomeraten, z.B. von Füllstoffen, ein distributives Mischen zur Verbesserung der räumlichen Verteilung der mit dem Fluid 2 zu mischenden Komponenten wie z.B. Füllstoffen und/oder niedrigviskosen Lösungen, sowie ein thermisches Mischen zur Vergleichmäßigung von Temperaturunterschieden innerhalb des Fluids 2.

Der Rotor 6 weist gemäß der ersten Ausführungsform der Mischvorrichtung 1 z.B. gemäß Fig.4 zumindest eine hohlzylindrisch ausgebildete Hülse 12 auf. Die Hülse 12 ist an einer ihrer Stirnseiten mit einer Rotor-Welle 13 verbunden, insbesondere verschraubt oder verschweißt. Über die Rotor-Welle 13 ist der Rotor 6 mittels eines hier nicht gezeigten, vorzugsweise mittels eines Elektromotors ausgebildeten Rotor-Antriebs antreibbar.

Der Rotor 6 weist zwei oder mehr, bevorzugterweise drei bis sechs, besonders bevorzugt vier, koaxial zueinander angeordnete hohlzylindrisch ausgebildete Hülsen 12, nämlich eine erste Hülse 12.1, eine zweite Hülse 12.2, eine dritte Hülse 12.3 und eine vierte Hülse 12.4, auf. Die Hülsen 12.1 - 12.4 enden am auskragenden Ende in einer gemeinsamen senkrecht zur Drehachse D ausgerichteten Ebene. Die Hülsen 12.1 - 12.4 weisen unterschiedliche Längen auf, wobei die Längen von der inneren, ersten Hülse 12.1 zur äußeren, vierten Hülse 12.4 zunehmen. Die Rotor-Welle 13 weist am den Hülsen 12.1 - 12.4 zugewandten Ende deswegen eine gestufte Form auf, wobei ein bezüglich der Drehachse D innerer Bereich der Rotor-Welle 13 näher am auskragenden Ende der Hülsen 12.1 - 12.4 endet als ein bezüglich der Drehachse D äußerer Bereich der Rotor-Welle 13.

Der Stator 5 weist, wie z.B. in Fig.1 und Fig.3 gezeigt, zumindest einen Rohrbogen 14 auf. Der Rohrbogen 14 ragt zumindest teilweise in den Freiraum des Rotors 6 zumindest teilweise in Richtung der Drehachse D hinein. Der Rohrbogen 14 wird insbesondere mittels des Flansches 5.F in Position gehalten. Der Rohrbogen 14 weist einen Hinführabschnitt auf, über welchen das Temperierfluid 8 vom Flansch 5.F in Richtung der Rotor-Welle 13 vorzugsweise parallel zur Drehachse D hinführbar ist. Der Rohrbogen 14 weist weiterhin einen Rückführabschnitt auf, über welchen das Temperierfluid 8 in Richtung des Flansches 5.F vorzugsweise parallel zur Drehachse D zurückführbar ist. Zwischen dem Hinführabschnitt und dem Rückführabschnitt ist eine Umlenkung ausgebildet. Das den Rohrbogen 14 bildende Rohr ist im Bereich des Hinführabschnittes und/oder des Rückführabschnittes vorzugsweise gerade und im Bereich der Umlenkung gekrümmt ausgeführt. Mittels des Hinführabschnittes ist im Bereich des Flansches 5.F ein Zufuhr-Anschluss des Rohrbogens 14 ausgebildet. Mittels des Rückführabschnittes ist im Bereich des Flansches 5.F ein Abfuhr-Anschluss des Rohrbogens 14 ausgebildet. Zwischen dem Zufuhr-Anschluss und dem Abfuhr-Anschluss ist z.B. mittels einer Pumpe eine Druckdifferenz des Temperierfluides 8 erzeugbar, aufgrund welcher das Temperierfluid 8 bei Betrieb der Pumpe dann durch den mittels des Rohrbogens 14 ausgebildeten Temperierkanal 7 hindurchströmt.

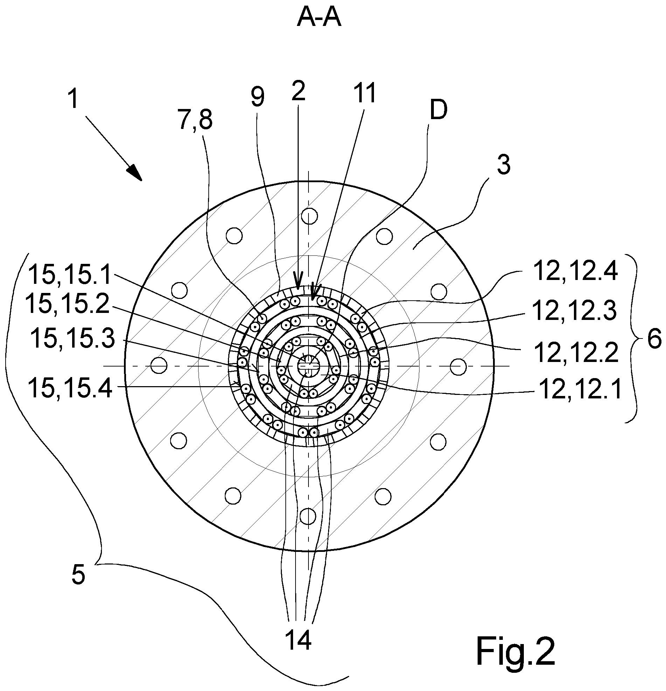

Der Stator 5 weist mehrere Rohrbögen 14 auf, welche rotationssymmetrisch zur Drehachse D angeordnet sind. Die Rohrbögen 14 sind z.B. im Wesentlichen rotationssymmetrisch zur Drehachse D und auch verschachtelt zueinander angeordnet, wie es in Fig.1 und Fig.2 für die beiden am nächsten zur Drehachse D angeordneten Rohrbögen 14 gezeigt ist. Wie es in Fig.1 und Fig.2 für die weiteren Rohrbögen 14 gezeigt ist, sind diese auch im Wesentlichen rotationssymmetrisch zur Drehachse D weiterhin zu zumindest einem Ring angeordnet.

Der Stator 5 weist zumindest eine Gruppe 15 von rotationssymmetrisch zur Drehachse D angeordneten Rohrbögen 14 auf. Es sind gemäß Fig.2 vier Gruppen 15, nämlich eine erste Gruppe 15.1 von Rohrbögen 14, eine zweite Gruppe 15.2 von Rohrbögen 14, eine dritte Gruppe 15.3 von Rohrbögen 14 und eine vierte Gruppe 15.4 von Rohrbögen 14, vorgesehen. Die Rohrbögen 14 der Gruppe 15.2, 15.3, 15.4 ragen jeweils zumindest teilweise in einen zwischen zwei benachbarten Hülsen 12.1 - 12.4 ausgebildeten Freiraum des Rotors 6 hinein. Die beiden am nächsten zur Drehachse D angeordneten Rohrbögen 14 bilden die erste Gruppe 15.1 und ragen jeweils zumindest teilweise in die erste Hülse 12.1 hinein. Die zweite Gruppe 15.2 wird mit fünf, zu einem Ring angeordneten, baugleichen Rohrbögen 14 gebildet, welche in den Zwischenraum zwischen der ersten Hülse 12.1 und der zweiten Hülse 12.2 zumindest teilweise hineinragen. Die dritte Gruppe 15.3 wird mit acht, zu einem Ring angeordneten, baugleichen Rohrbögen 14 gebildet, welche in den Zwischenraum zwischen der zweiten Hülse 12.2 und der dritten Hülse 12.3 zumindest teilweise hineinragen. Die vierte Gruppe 15.4 wird mit elf, zu einem Ring angeordneten, baugleichen Rohrbögen 14 gebildet, welche in den Zwischenraum zwischen der dritten Hülse 12.3 und der vierten Hülse 12.4 zumindest teilweise hineinragen. Denkbar wäre demgegenüber auch eine andere Anzahl von Rohrbögen pro Gruppe vorzusehen. Weiterhin könnten auch außerhalb der äußeren, vierten Hülse noch Teile des Stators, insbesondere entsprechende Rohrbögen angeordnet, sein.

Vorzugsweise sind die Zufuhr-Anschlüsse mehrerer, vorzugsweise aller Rohrbögen 14 gemeinsam an einen Auslass einer Pumpe angeschlossen. Vorzugsweise sind die Abfuhr-Anschlüsse mehrerer, vorzugsweise aller Rohrbögen 14 gemeinsam an einen Einlass einer Pumpe angeschlossen.

Gemäß Fig.5 weist der Stator 5 in Richtung der Drehachse D eine Ausnehmung auf, in welcher ein Rohr angeordnet ist. Über das Rohrinnere ist das Temperierfluid 8 in Richtung der Rotor-Welle 13 hinführbar. Das Temperierfluid 8 ist am Außenumfang des Rohres in einer Richtung von der Rotor-Welle 13 weg zurückführbar. Entgegengesetzte Durch- bzw. Umströmungen dieses Rohres wären auch denkbar.

Die Mischkammer 4 ist zylindrisch ausgeführt. Ein Verhältnis zwischen einer Länge der Mischkammer und einem Innendurchmesser der Mischkammer 4 weist Werte von zwei bis fünf, bevorzugt von in etwa drei, auf.

Fig.5 zeigt einen Extruder 16 mit einer Mischvorrichtung 1 gemäß einer zweiten Ausführungsform und mit einer in einem Schneckengehäuse 17 des Extruders 16 gelagerten Extruderschnecke 18, die mit einem Schneckenantrieb 19 des Extruders 16 gekoppelt ist. Das Gehäuse 3 der Mischvorrichtung 1 ist mit dem Schneckengehäuse 17 verbunden und/oder zumindest teilweise mittels des Schneckengehäuses 17 ausgebildet. Der Zulauf 4.Z der Mischkammer 4 ist hier im Bereich eines der Mischvorrichtung 1 zugewandten Endes der Extruderschnecke 18 ausgebildet, an welchem die Extruderschnecke 18 mit dem Rotor 6 verbunden ist. Der Zulauf 4.Z ist ringförmig ausgebildet, nämlich zwischen einem Innendurchmesser des Schneckengehäuses 17 und einem Kerndurchmesser der Extruderschnecke 18. An dem der Extruderschnecke 18 gegenüberliegenden Ende des Rotors 6 ist der Ablauf 4.A der Mischkammer 4 als radial zur Drehachse D ausgerichteter Durchgang im Gehäuse 3 ausgebildet.

Der Rotor, insbesondere die Rotor-Welle, könnte mit der Extruderschnecke an einem dem Schneckenantrieb abgewandten Ende, insbesondere mittels einer Schraubverbindung, verbunden sein. Insbesondere könnte dazu die in Fig.1 gezeigte erste Ausführungsform der Mischeinrichtung genutzt werden, welche dazu dann ein Außengewinde an der Rotor-Welle 13 aufweist. Die Extruderschnecke 18 ist gemäß Fig.5 einstückig mit dem Rotor 6 ausgebildet. Andere Verbindungsmechanismen zwischen dem Rotor, insbesondere der Rotor-Welle, und der Extruderschnecke sind denkbar.

Die Extruderschnecke 18 weist eine Innentemperierung 20 auf, über welche der Rotor 6 mit Temperierfluid 8 versorgbar ist. Gemäß Fig.5 weist die Extruderschnecke 18 in Richtung der Drehachse D dazu, ähnlich wie der Stator 5, eine Ausnehmung auf, in welcher ein Rohr angeordnet ist. Über das Rohrinnere ist das Temperierfluid 8 zur Rotor-Welle 13 hinführbar. Über in dem Rotor 6 ausgebildete Temperierkanäle 7 ist das Temperierfluid 8 um den Stator 5 herum und in Richtung der Drehachse D bis zu einem der Extruderschnecke 18 entgegengesetzten Endbereich der Mischkammer 4 und wieder zurück leitbar. Das Temperierfluid 8 ist dann am Außenumfang des Rohres in einer Richtung von der Rotor-Welle 13 weg in Richtung des Schneckenantriebs 19 zurückführbar. Entgegengesetzte Durch- bzw. Umströmungen des Rohres wären auch denkbar. Das Temperierfluid 8 ist der Extruderschnecke 18, insbesondere deren Innentemperierung 20, üblicherweise über eine sogenannte Drehdurchführung im Bereich des Schneckenantriebes 19 zuführbar. Als Temperierfluid 8 für die Innentemperierung 20 kommt vorzugsweise dasselbe Temperierfluid 8 wie zur Durchströmung des Stators 5 zum Einsatz, so dass für der Stator 5, der Rotor 6 und die Innentemperierung 20 Teil eines gemeinsamen Temperierkreislaufes sind, zu dessen Durchströmung dann vorzugsweise nur eine Pumpe notwendig ist. Fig.5 zeigt eine weitere Temperierung 21 des Extruders 16, welche hier als um den Außenumfang des Schneckengehäuses 17 angeordnete Heiz-Kühlmanschette ausgeführt ist. Die Temperierung 21 weist vorzugsweise eine elektrische Heizung und eine Luftkühlung auf, wobei die Luftkühlung u.a. mit Hilfe von Kühlrippen und vorzugsweise mittels eines Ventilators ausbildbar ist.

Im Folgenden wird nun ein Verfahren zum Betreiben einer dynamischen Mischvorrichtung 1 für ein Fluid 2 z.B. gemäß ihrer ersten oder ihrer zweiten Ausführungsform beschrieben. Die dynamische Mischvorrichtung 1 kann dabei auch Teil des Extruders 16 sein. Der Rotor 6 der Mischvorrichtung 1 wird innerhalb der mittels des Gehäuses 3 der Mischvorrichtung 1 ausgebildeten Mischkammer 4 um die Drehachse D und um einen auch zumindest teilweise innerhalb der Mischkammer 4 angeordneten, mit dem Gehäuse 3 verbundenen und/oder mittels des Gehäuses 3 ausgebildeten und zumindest teilweise in einen Freiraum des Rotors 6 hineinragenden Stator 5 der Mischvorrichtung 1 rotiert. Der Stator 5 und/oder der Rotor 6 wird mittels eines durch einen Temperierkanal 7 des Stators 5 und/oder des Rotors 6 hindurchströmenden Temperierfluids 8 temperiert.

Durch die Rotation des Rotors 6 wird das Fluid 2 besonders gut durchmischt und gleichzeitig temperiert, so dass das die Mischvorrichtung 1 verlassende Fluid 2 besonders gleichmäßige Eigenschaften aufweist. In weiteren Verfahrensschritten sind deswegen besonders hochwertige Produkte, wie z.B. Fasern, Fäden und/oder Folien aus dem Fluid 2 herstellbar.

### Bezugszeichenliste

- 1: dynamische Mischvorrichtung
- 2: Fluid
- 3: Gehäuse
- 4: Mischkammer
- 4.Z: Zulauf der Mischkammer 4

- 4.A: Ablauf der Mischkammer 4

- 5: Stator
- 5.F: Flansch

- 6: Rotor
- 7: Temperierkanal
- 8: Temperierfluid
- 9: Rotor-Durchbruch
- 10: Stator-Ausnehmung
- 11: Stator-Durchbruch
- 12: Hülse
- 12.1: erste Hülse
- 12.2: zweite Hülse
- 12.3: dritte Hülse
- 12.4: vierte Hülse
- 13: Rotor-Welle
- 14: Rohrbogen
- 15: Gruppe von Rohrbögen 14
- 15.1: erste Gruppe von Rohrbögen 14
- 15.2: zweite Gruppe von Rohrbögen 14
- 15.3: dritte Gruppe von Rohrbögen 14
- 15.4: vierte Gruppe von Rohrbögen 14
- 16: Extruder
- 17: Schneckengehäuse
- 18: Extruderschnecke
- 19: Schneckenantrieb
- 20: Innentemperierung
- 21: Temperierung
- D: Drehachse

## Patentansprüche

1. Dynamische Mischvorrichtung (1) für ein Fluid (2), insbesondere für ein viskoses Medium, mit einer mittels eines Gehäuses (3) ausgebildeten Mischkammer (4), mit einem Stator (5) und mit einem Rotor (6), wobei der Stator (5) und der Rotor (6) zumindest teilweise innerhalb der Mischkammer (4) angeordnet sind, wobei der Stator (5) mit dem Gehäuse (3) verbunden und/oder mittels des Gehäuses (3) ausgebildet ist, wobei der Rotor (6) um eine Drehachse (D) rotierbar ist, wobei mittels des Rotors (6) zumindest ein Freiraum ausgebildet ist, in welchen der Stator (5) zumindest teilweise in Richtung der Drehachse (D) hineinragt, wobei der Stator (5) und/oder der Rotor (6) zumindest einen Temperierkanal (7) aufweist, durch welchen zur Temperierung des Stators (5) und/oder des Rotors (6) ein Temperierfluid (8) hindurchströmbar ist.

2. Mischvorrichtung (1) nach Anspruch 1, **dadurch gekennzeichnet, dass** durch ein Rotieren des Rotors (6) ein Fluidstrom des Fluids (2) vom Rotor (6) in Richtung des Stators (5) erzeugbar und/oder ein derartiger Fluidstrom zur Durchmischung des Fluids (2) veränderbar ist.

3. Mischvorrichtung (1) nach Anspruch 1 oder 2, **dadurch gekennzeichnet, dass** der Stator (5) und der Rotor (6) zumindest teilweise koaxial zueinander angeordnet sind.

4. Mischvorrichtung (1) nach wenigstens einem der vorangehenden Ansprüche, **dadurch gekennzeichnet, dass** der Rotor (6) zumindest einen Rotor-Durchbruch (9) aufweist.

5. Mischvorrichtung (1) nach wenigstens einem der vorangehenden Ansprüche, **dadurch gekennzeichnet, dass** der Stator (5) zumindest eine Stator-Ausnehmung (10) und/oder einen Stator-Durchbruch (11) aufweist.

6. Mischvorrichtung (1) nach Anspruch 5, **dadurch gekennzeichnet, dass** sich der Rotor-Durchbruch (9) und die Stator-Ausnehmung (10) und/oder der Stator-Durchbruch (11) bei einer Rotation des Rotors (6) zumindest teilweise zumindest zeitweise überlappen.

7. Mischvorrichtung (1) nach wenigstens einem der vorangehenden Ansprüche, **dadurch gekennzeichnet, dass** der Rotor (6) zumindest eine hohlzylindrisch ausgebildete Hülse (12) aufweist, wobei die Hülse (12) an einer ihrer Stirnseiten mit einer Rotor-Welle (13) verbunden, insbesondere verschraubt oder verschweißt, ist.

8. Mischvorrichtung (1) nach wenigstens einem der vorangehenden Ansprüche, **dadurch gekennzeichnet, dass** der Rotor (6) zwei oder mehr, bevorzugterweise drei bis sechs, besonders bevorzugt vier, koaxial zueinander angeordnete hohlzylindrisch ausgebildete Hülsen (12.1 - 12.4) aufweist.

9. Mischvorrichtung (1) nach wenigstens einem der vorangehenden Ansprüche, **dadurch gekennzeichnet, dass** der Stator (5) zumindest einen Rohrbogen (14) aufweist, wobei der Rohrbogen (14) zumindest teilweise in den Freiraum des Rotors (6) zumindest teilweise in Richtung der Drehachse (D) hineinragt.

10. Mischvorrichtung (1) nach wenigstens einem der vorangehenden Ansprüche, **dadurch gekennzeichnet, dass** der Stator (5) mehrere Rohrbögen (14) aufweist, welche rotationssymmetrisch zur Drehachse (D) angeordnet sind.

11. Mischvorrichtung (1) nach wenigstens einem der vorangehenden Ansprüche 8 bis 10, **dadurch gekennzeichnet, dass** der Stator (5) zumindest eine Gruppe (15) von rotationssymmetrisch zur Drehachse (D) angeordneten Rohrbögen (14) aufweist, wobei die Rohrbögen (14) der Gruppe (15) jeweils zumindest teilweise in einen zwischen zwei benachbarten Hülsen (12.1 - 12.4) ausgebildeten Freiraum des Rotors (6) hineinragen.

12. Extruder (16) mit einer Mischvorrichtung (1) nach wenigstens einem der vorangehenden Ansprüche und mit einer in einem Schneckengehäuse (17) des Extruders (16) gelagerten Extruderschnecke (18), die mit einem Schneckenantrieb (19) des Extruders (16) gekoppelt ist, wobei das Gehäuse (3) der Mischvorrichtung (1) mit dem Schneckengehäuse (17) verbunden und/oder zumindest teilweise mittels des Schneckengehäuses (17) ausgebildet ist.

13. Extruder (16) nach Anspruch 12, **dadurch gekennzeichnet, dass** der Rotor, insbesondere die Rotor-Welle, mit der Extruderschnecke an einem dem Schneckenantrieb abgewandten Ende, insbesondere mittels einer Schraubverbindung, verbunden ist.

14. Extruder (16) nach Anspruch 12, **dadurch gekennzeichnet, dass** die Extruderschnecke (18) einstückig mit dem Rotor (6) ausgebildet ist.

15. Extruder (16) nach wenigstens einem der vorangehenden Ansprüche 12 bis 14, **dadurch gekennzeichnet, dass** die Extruderschnecke (18) eine Innentemperierung (20) aufweist, über welche der Rotor (6) mit Temperierfluid (8) versorgbar ist.

16. Verfahren zum Betreiben einer dynamischen Mischvorrichtung (1) für ein Fluid (2), insbesondere nach einem der Ansprüche 1 bis 11, und/oder eines Extruders (16) mit der dynamischen Mischvorrichtung (1), insbesondere nach einem der Ansprüche 12 bis 15, wobei ein Rotor (6) der Mischvorrichtung (1) innerhalb einer mittels eines Gehäuses (3) der Mischvorrichtung (1) ausgebildeten Mischkammer (4) um eine Drehachse (D) und um einen auch zumindest teilweise innerhalb der Mischkammer (4) angeordneten, mit dem Gehäuse (3) verbundenen und/oder mittels des Gehäuses (3) ausgebildeten und zumindest teilweise in einen Freiraum des Rotors (6) hineinragenden Stator (5) der Mischvorrichtung (1) rotiert wird, wobei der Stator (5) und/oder der Rotor (6) mittels eines durch einen Temperierkanal (7) des Stators (5) und/oder des Rotors (6) hindurchströmenden Temperierfluids (8) temperiert wird.
